Europäisches Patentamt

European Patent Office

Office européen des brevets

(11) Numéro de publication: **0 315 555**
**A1**

## DEMANDE DE BREVET EUROPEEN

(21) Numéro de dépôt: **88450038.0**

(22) Date de dépôt: **02.11.88**

(51) Int. Cl.⁴: **C 12 G 1/02**
**B 05 B 3/10**

(30) Priorité: **06.11.87 FR 8715601**

(43) Date de publication de la demande:
**10.05.89 Bulletin 89/19**

(84) Etats contractants désignés: **DE ES GR IT**

(71) Demandeur: **David, Gilbert**
**54, rue el Alamein**
**F-33000 Bordeaux (FR)**

**David, Bruno**
**Cité Léon Blum Appt 328 Batiment Fauvettes**
**F-33200 Bordeaux (FR)**

(72) Inventeur: **David, Gilbert**
**54, rue el Alamein**
**F-33000 Bordeaux (FR)**

**David, Bruno**
**Cité Léon Blum Appt 328 Batiment Fauvettes**
**F-33200 Bordeaux (FR)**

(74) Mandataire: **Trolliet, Jean-Claude**
**Cabinet BURDIPAT 20, cours du Chapeau Rouge**
**F-33000 Bordeaux (FR)**

(54) **Dispositif de diffusion pour l'arrosage intégral de matières contenues dans une cuve cylindrique.**

(57) L'invention concerne un dispositif de diffusion permettant l'arrosage intégral de denrées pouvant macérer au cours de leur fermentation contenues dans une cuve cylindrique tel que chapeau de marc flottant durant la vinification ainsi que pour des traitements de matières diverses nécessitant leur arrosage.

Le dispositif de diffusion comporte une colonne verticale (1) maintenue au centre et en partie haute de la cuve et raccordée à une canalisation (2) d'amenée de produits à diffuser, la partie inférieure (3) de la colonne sert de guide à un manchon coulissant (4) en bout duquel est fixé un cône creux (6) son sommet (7) orienté vers le bas de telle sorte que les produits soient diffusés de manière circulaire sur le pourtour de la base (8), la variation de la courbe de diffusion des produits étant obtenue en modifiant la position dans le sens vertical du cône (6) au moyen d'un vérin (13) engendrant grâce à son couple résistant un mouvement rotatif alternatif dudit cône (6).

Fig.1

EP 0 315 555 A1

# Description

## Dispositif de diffusion pour l'arrosage intégral de matières contenues dans une cuve cylindrique

La présente invention est relative à un dispositif de diffusion permettant l'arrosage intégral de denrées pouvant macérer au cours de leur fermentation contenues dans une cuve cylindrique tel que chapeau de marc flottant durant la vinification ainsi que pour des traitements de matières diverses nécessitant leur arrosage.

On connaît en cours de vinification pour éviter que le marc s'aigrisse l'immersion fréquente de celui-ci à des intervalles réguliers durant la fermentation, cette immersion est réalisée généralement par soutirage d'une partie du jus contenu dans la cuve et sa réinsertion en partie haute de la cuve au moyen d'arroseurs fixes ou tournant projetant le jus de raisin sur le chapeau de marc, ladite projection s'effectue aux mêmes endroits et crée des courants préférentiels ce qui est néfaste à la coloration, d'autre part le chapeau de marc n'est pas intégralement arrosé, il en est de même pour les denrées diverses mises en macération à chapeau flottant.

L'invention a pour but de pallier aux inconvénients précédemment exposés.

L'invention a pour objet un dispositif de diffusion pour l'arrosage de chapeau flottant de denrées pouvant macérer ou de matières diverses nécessitant leur arrosage, comportant une colonne verticale de distribution maintenue sur un bâti destiné à être placé au centre de la cuve et en sa partie haute, ladite colonne est raccordée à une canalisation d'amenée de produits liquides à diffuser tels que ceux contenus dans la cuve ou hors de celle-ci ou de tous autres produits liquides différents stockés extérieurement à la cuve, les produits sont véhiculés sous pression au travers de la canalisation au moyen d'une pompe de remontée, en la partie inférieure de la colonne verticale de distribution est maintenu de manière coulissante un manchon tubulaire prolongé en sa partie inférieure par un cône creux de diffusion, son sommet orienté vers le bas et sa base décalée du bas de la colonne de distribution de sorte que les produits liquides expulsés soient diffusés de manière circulaire sur le pourtour de ladite base et au travers d'encoches aménagées sur ledit pourtour réparties selon des arcs égaux, la variation de la courbe de diffusion afin d'arroser l'intégralité de la matière contenue dans la cuve est obtenue en modifiant progressivement la position verticale du cône par rapport au bas de la colonne de distribution et ce au moyen d'un vérin raccordé par des tiges à la bride du manchon, durant le déplacement progressif du cône ce dernier est animé d'un mouvement rotatif provoqué par le couple résistant du vérin.

D'autres caractéristiques et avantages de l'invention ressortiront plus clairement de la description qui va suivre faite en regard des dessins joints donnés à titre d'exemple non limitatif, où :
- la figure 1 est une vue en élévation du dispositif , le cône de diffusion étant placé en partie haute,
- la figure 2, une vue en élévation du dispositif, le cône de diffusion étant placé en partie basse,
- la figure 3, une vue de dessus du cône de diffusion.

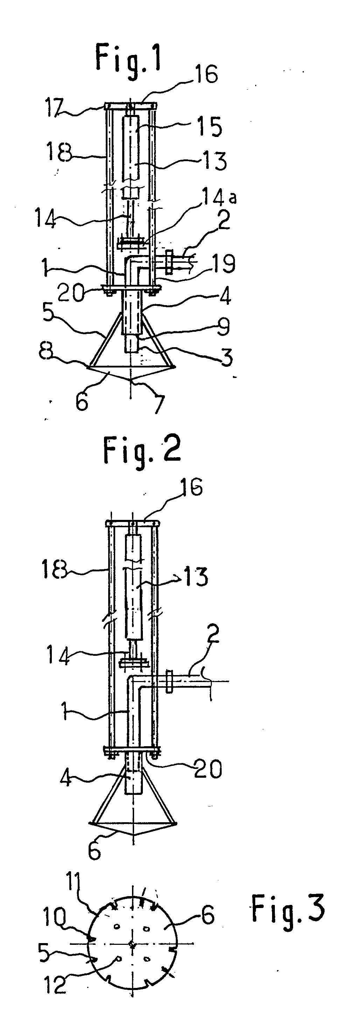

Tel que représenté figures 1 à 3, le dispositif de diffusion de produits liquides comporte une colonne verticale de distribution 1 maintenue sur un bâti non représenté destiné à être disposé et maintenu au centre et en partie haute de la cuve contenant la matière à arroser, ladite colonne 1 est raccordée à une canalisation 2 d'amenée de produits liquides à diffuser tels que ceux contenus dans la cuve ou stockés extérieurement à celle-ci, lesdits produits liquides étant véhiculés dans ladite canalisation au moyen d'une pompe de remontée généralement électrique. La colonne verticale de distribution 1 en sa partie inférieure 3 sert de guide à un manchon tubulaire 4 coulissant sur ladite colonne 1, sur ledit manchon 4 sont fixées des pattes 5 en bout desquelles est fixé un cône creux 6 dont le sommet 7 est orienté vers le bas et dont la base 8 est décalée du bas 9 de l'élément coulissant 4 de manière que lors de l'expulsion sous pression des produits liquides passant au travers de la colonne 1, lesdits produits soient diffusés de manière circulaire sur le pourtour de la base 8 selon une courbe dépendant de la pression d'expulsion, afin d'élargir la surface arrosée, sur le pourtour 11 de la base 8 du cône 6 des encoches 10 sont aménagées et réparties selon des arcs égaux, afin d'arroser la partie de matières se trouvant sous le cône 6 des évidements circulaires 12 sont aménagés sur la surface latérale de celui-ci. De sorte à faire varier la courbe de diffusion des produits liquides afin d'arroser l'intégralité des matières contenues dans la. cuve, la position dans le sens vertical du cône 6 est modifiée par rapport à la partie inférieure 3 de la colonne 1, cette modification étant opérée progressivement grâce à un vérin 13, la tige 14 de ce dernier étant fixée sur un support 14a du bâti, tandis que l'extrémité du fût 15 reçoit et maintient de manière articulée un balancier 16 aux extrémités 17 duquel sont maintenues articulées deux tiges 18 raccordées en leur partie basse 19 à la bride 20 solidaire du manchon 4, durant le déplacement vertical du cône 6 celui-ci est animé d'un mouvement rotatif alternatif selon la montée ou descente provoqué par le couple résistant du vérin 13.

Il va de soi que les différentes opérations sont synchronisées et programmées de manière connue et que outre l'arrosage des matières contenues dans la cuve, le diffuseur est avantageusement utilisé pour le nettoyage des parois de la cuve contenant lesdites matières, notamment lorsque le cône 6 est en sa position haute c'est à dire sa base 8 le plus prés de la partie inférieure 3 de la colonne 1 de distribution.

**Revendications**

1°) Dispositif de diffusion pour l'arrosage de chapeau flottant de denrées pouvant macérer au cours de leur fermentation ou de matières diverses nécessitant leur arrosage contenues dans une cuve cylindrique du type comportant une colonne verticale de distribution maintenue en partie haute de la cuve en son centre, ladite colonne étant raccordée à une canalisation d'amenée des produits liquides à diffuser contenus dans la cuve ou hors de celle-ci,les produits à diffuser étant véhiculés sous pression au travers de la canalisation au moyen d'une pompe de remontée, caractérisé en ce qu'en la partie inférieure (3) de la colonne verticale de distribution (1) est maintenu de manière coulissante un manchon tubulaire (4) prolongé en sa partie inférieure par un cône creux (6) dont la base (8) est décalée de la partie basse (9) du manchon (4) de sorte que les produits expulsés soient diffusés de manière circulaire sur le pourtour de ladite base (8), la variation de la courbe de diffusion étant obtenue par modification progressive de la position verticale du cône (6) par rapport à la partie inférieure (3) de la colonne de distribution au moyen d'un vérin (13).

2°) Dispositif de diffusion selon la revendication 1 caractérisé en ce que sur le pourtour (11) de la base (8) du cône (6) des encoches (10) sont aménagées et réparties selon des arcs égaux de manière à élargir la surface arrosée.

3°) Dispositif de diffusion selon la revendication 1 caractérisé en ce que sur la surface latérale du cône 6 des évidements circulaires (12) sont aménagés afin d'arroser la matière se trouvant sous le cône (6).

4°) Dispositif de diffusion selon la revendication 1 caractérisé en ce que le vérin (13) permettant de modifier progressivement la position du cône (6) par rapport à la partie inférieure (3) de la colonne de distribution (1) a sa tige (14) fixée sur un support (14a) du bâti, son fût (15) recevant et maintenant articulé un balancier (16) aux extrémités (17) duquel sont maintenues articulées deux tiges (18) raccordées en leur partie basse (19) à la bride (20) du manchon (4).

5°) Dispositif de diffusion selon les revendications 1 et 4 caractérisé en ce que durant le déplacement vertical progressif du cône (6) ce dernier est animé d'un mouvement rotatif alternatif selon sa montée ou descente provoquée par le couple résistant du vérin (13).

6°) Dispositif de diffusion selon la revendication 1 caractérisé en ce qu'en position haute de la base (8) du cône (6) par rapport à la partie inférieure (3) de la colonne de distribution (1), la courbe d'arrosage permet le nettoyage intérieur des parois verticales de la cuve.

# Fig.1

# Fig.2

# Fig.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 404 473 (F. FABRI) | | C 12 G 1/02 |
| | --- | | B 05 B 3/10 |
| A | FR-A-2 317 972 (ICI LTD) | | |
| | --- | | |
| A | FR-A-2 102 002 (THE B.F. GOODRICH CIE) | | |
| | ----- | | |

**DOMAINES TECHNIQUES RECHERCHES (Int. Cl.4)**

C 12 G
B 05 B

Le présent rapport a été établi pour toutes les revendications

| Lieu de la recherche | Date d'achèvement de la recherche | Examinateur |
|---|---|---|
| LA HAYE | 25-01-1989 | COUCKE A.O.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

  & : membre de la même famille, document correspondant

EPO FORM 1503 03.82 (P0402)